# EUROPÄISCHE PATENTSCHRIFT

(11) **EP 3 580 387 B1**
(45) Veröffentlichungstag und Bekanntmachung des Hinweises auf die Patenterteilung: **16.12.2020**
(21) Anmeldenummer: 18702721.4
(22) Anmeldetag: 07.02.2018
(51) Int. Cl.: D06N 3/00, D06N 3/12, F16L 59/14, F16L 59/02

(54) **VERFAHREN ZUR HERSTELLUNG EINER WÄRMEDÄMMENDEN SCHICHT**
METHOD FOR PRODUCING A HEAT INSULATION LAYER
PROCÉDÉ DESTINÉ À LA FABRICATION D'UNE COUCHE D'ISOLATION THERMIQUE

(30) Priorität: 09.02.2017 EP 17155384; 07.04.2017 US 201762482986 P
(43) Veröffentlichungstag der Anmeldung: 18.12.2019
(73) Patentinhaber: Evonik Operations GmbH, 45128 Essen (DE)
(72) Erfinder: GEISLER, Matthias, 37176 Nörten-Hardenberg (DE); NUMRICH, Uwe, 64846 Groß-Zimmern (DE); BOES, Ulrich, 60528 Frankfurt a.M. (DE)
(74) Vertreter: Evonik Patent Association
(86) Internationale Anmeldenummer: PCT/EP2018/053056
(87) Internationale Veröffentlichungsnummer: WO 2018/146137

(56) Entgegenhaltungen:
- US-A1- 2015 000 259
- US-A1- 2016 084 140

## Beschreibung

Die vorliegende Erfindung betrifft ein Verfahren zur Aufbringung einer wärmedämmenden Schicht auf eine zu isolierende Oberfläche, insbesondere die von Rohren.

Effektive Wärmedämmung von Häuser, industriellen Anlagen, Rohrleitungen und desgleichen stellt ein wichtiges volkswirtschaftliches Problem dar. Die meisten auf organischen Stoffen basierenden Isolierungsmaterialien, wie Polyurethanschäume sind brennbar und nur bei eingeschränkten Temperaturen einsetzbar. Die bisher weniger verbreiteten Wärmedämmungsmaterialien basierend auf anorganischen Oxiden, beispielsweise hochporöses Siliziumdioxid, weisen diese Nachteile nicht auf.

Als Basis solcher Siliziumdioxid-basierenden wärmedämmenden Materialien werden üblicherweise die sogenannten Aerogele, sowie gefällte oder pyrogen hergestellte Kieselsäuren verwendet. Weiterführende Informationen zu diesen Kieselsäuretypen sind in Ullmann's Encyclopedia of Industrial Chemistry, Kapitel "Silica" veröffentlicht online am 15.04.2008, DOI: 10.1002/14356007.a23_583.pub3, zu finden.

Die zuvor beschriebenen Wärmedämmenden Materialien können beispielsweise in Form einer Beschichtung auf die zu dämmende Oberfläche aufgebracht werden.

In WO 03/064025 A1 werden solche wärmedämmenden Beschichtungen und deren Applizierung beschrieben. Eine geeignete Zusammensetzung enthaltend wasser-basierte polymerisierbare Acrylat-Binder, hydrophobe Aerogele und gegebenenfalls weitere Zusatzstoffe, wie IR-Trübungsmittel, wird üblicherweise in einer Schichtdicke von 1 mm oder weniger aufgetragen und beispielsweise thermisch gehärtet.

Eine dickere Wärmedämmungsschicht, die eine bessere Wärmedämmung gewährleisten würde, kann mittels einer Zusammensetzung wie in WO 03/064025 A1 offenbart nur in mehreren Arbeitsschritten nacheinander aufgetragen werden.

Sowohl die pulverförmigen oder granularen wärmedämmenden Materialien als auch deren Gemische mit anderen Komponenten oder darauf basierende Zusammensetzungen können in eine tragende Konstruktion, wie beispielsweise zwischen einem Innen- und Außenrohr, eingeschlossen werden. In WO 99/05447 wird beispielsweise eine solche Art der Wärmedämmung von Rohren offenbart, bei der eine Zusammensetzung aus sphärischen Partikeln, einem Schaumstoff und Binder zwischen zwei ineinanderlegenden Rohren eingeschlossen wird. In US 2006/027227 A1 ist ein vom Prinzip ähnliches Rohr-im-Rohr System beschrieben, das mit Aerogel Partikeln gefüllt wird.

In US 3574027 A wird ein Verfahren zur Herstellung eines Wärmedämmungskörpers offenbart, bei dem mehrere mit polymerisierbaren organischen Substanzen imprägnierte Mineralfasermatten mit einer wässrigen Dispersion eines Wärmedämmungsmaterials untereinander verbunden werden gefolgt durch Erhitzung des so erhaltenen mehrschichtigen Systems, die zur Polymerisation des Bindungsmaterials, Verdampfung des Wassers und als Ergebnis, Härtung des so erhaltenen Wärmedämmungskörpers führt. Dieses mehrstufige Verfahren kann wegen seiner Komplexität nur sehr eingeschränkt für die Wärmedämmung der Rohre und anderen nicht flachen Gegenständen verwendet werden.

US 6472067 B1 offenbart ein Verfahren zur Herstellung nicht-brennbarer gehärteter Kompositen durch:
a) Herstellung eines Polyalkylsiloxanpolymers;
b) Imprägnierung eines Fibermaterials mit diesem Polymer;
c) Trocknung und thermische Härtung des Polymers.

In WO 2016/171558 wird ein Verfahren zur Aufbringung einer wärmedämmenden Aerogel-haltigen Beschichtung auf einen porösen Substrat wie Membrane, Schäume und Derartiges offenbart, umfassend die folgenden Schritte:
a) Herstellung eines Silicasols durch Hydrolyse eines Trialkoxysilans;
b) Imprägnierung eines porösen Substrats mit diesem Sol;
c) Gelierung des Silicasols zu einem Gel;
d) Austausch von Wasser gegen ein organisches Lösungsmittel;
e) Trocknung.

Kein der aus dem Stand der Technik bekannten Verfahren ermöglicht eine einfache und praktische Aufbringung einer relativ dicken wärmedämmenden Schicht auf die zu isolierende Oberfläche. Die Aufgabe der vorliegenden Erfindung ist es, dieses Problem zu lösen. Insbesondere, ist die Aufgabe dieser Erfindung ein einfach durchführbares Verfahren geeignet unter anderem für die Fertigung im Werk, zur Ausbesserung und zum Nachrüsten im Bestand, bereitzustellen. Eine weitere Aufgabe der Erfindung ist es, ein Verfahren zum Aufbringen einer wärmedämmenden Schicht auf eine nicht horizontal positionierte, beispielsweise geneigte Oberfläche oder auf eine untere Oberfläche einer horizontal positionierten Oberfläche, bereitzustellen. In diesen Fällen würde eine typische aus dem Stand der Technik bekannte, nicht gehärtete wärmedämmende Beschichtung von der zu isolierenden Oberfläche abfließen oder abtropfen. Aus dem gleichen Grund ist es auch eine weitere Aufgabe der Erfindung ein Verfahren zum Aufbringen einer wärmedämmenden Schicht auf eine stark unebene, gewölbte oder gerundete Oberfläche, bereitzustellen.

Diese Aufgaben wurden durch ein Verfahren zur Aufbringung einer wärmedämmenden Schicht auf eine zu isolierende Oberfläche eines Gegenstandes umfassend die folgenden Schritte:
a) Aufbringung eines aus einem Abstandgewirke bestehenden porösen Substrats auf die zu isolierende Oberfläche;
b) Befüllung der im Schritt a) aufgebrachten porösen Substrats mit einer wärmedämmenden Formulierung;
c) Härtung der im Schritt b) befüllten Formulierung, gelöst.

Im Prinzip kann jede mögliche Oberfläche eines Gegenstandes nach dem erfindungsgemäßen Verfahren gedämmt werden. Die zu isolierende Oberfläche kann flach, gewölbt, gerundet, eckig sein, oder eine andere Beschaffenheit aufweisen, sie kann glatt oder rau, uneben sein. Die zu isolierende Oberfläche kann räumlich beliebig positioniert werden, beispielsweise horizontal, vertikal oder geneigt zur Erdoberfläche sein. Bevorzugt wird der die zu isolierende Oberfläche aufweisende Gegenstand aus der Gruppe bestehend aus Wand, Decke, Flur, Platte, Rohrleitung und Rohr ausgewählt. Besonders bevorzugt können mit dem erfindungsgemäßen Verfahren Rohrleitungen und/oder Rohre isoliert werden.

Das im erfindungsgemäßen Verfahren verwendete poröse Substrat kann durch seine dazu geeignete Form und Beschaffenheit die wärmedämmende Schicht vor und während der Härtung so befestigen und halten, dass keine vorzeitige Verformung stattfindet und eine dicke Wärmedämmende Schicht aufgetragen werden kann.

Das im erfindungsgemäßen Verfahren eingesetzte poröse Substrat ist bevorzugt flexibel und kann somit leicht verformt werden. Solche porösen Substrate können der Form der zu isolierenden Oberfläche am besten angepasst werden, so dass eine bessere Wärmedämmung gewährleistet werden kann. So kann man beispielsweise problemlos ein Rohr oder ähnliche zu isolierende Gegenstände mit dem porösen Substrat umwickeln.

Die Porosität P eines Materials wird oft als Verhältnis von Hohlraumvolumen zu Gesamtvolumen dieses Materials ausgedrückt und kann somit die Werte von 0 bis 1 annehmen. Die Porosität P des porösen Substrats im Sinne der vorliegenden Erfindung, kann von 0,3 bis 1 betragen, besonders bevorzugt ist sie von 0,5 bis 0,99, ganz besonders bevorzugt von 0,7 bis 0,98. Das poröse Substrat kann aus der Liste bestehend aus synthetischen Polymeren, Zellulose-basierten Faser, Baumwolle, Wolle, Seide, Mineralwolle, Glaswolle, Metallen, Kohlefaser und deren Kombinationen ausgewählt werden.

Das poröse Substrat besteht aus einem Abstandgewirke. Abstandsgewirke stellen doppelflächige Textilien oder Geweben dar, bei denen die entsprechenden Textilien- oder Gewebeflächen durch abstandshaltende Verbindungsfäden, sogenannte Polfäden, auf Distanz gehalten werden. Es handelt sich bei den Abstandsgewirken um Maschenwaren oder Gewirke, die um die dritte Dimension erweitert wurden. Abstandsgewirke zeichnen sich durch einen leichten, luftdurchlässigen Aufbau aus, wobei Abstandsgewirke durch die zwischen den beiden Gewirkelagen verlaufenden Abstandsfäden in Richtung ihrer Dicke elastisch sind.

Das Abstandgewirke kann eine Maschenweite von 2 bis 100 mm, bevorzugt von 2 bis 30 mm, besonders bevorzugt von 5 bis 20 mm aufweisen.

In einer besonders bevorzugten Ausführungsform der Erfindung weist das Abstandgewirke eine Druckspannung nach DIN EN ISO 3386-1 von größer als 100 Pa, bevorzugt von größer als 300 Pa, besonders bevorzugt von größer als 500 Pa, ganz besonders bevorzugt von 1 kPa bis 500 kPa auf. Ganz besonders vorteilhaft ist es, wenn das Abstandgewirke eine Druckspannung nach DIN EN ISO 3386-1 von größer als 3 kPa und eine Maschenweite von 2 bis 30 mm aufweist.

Das Abstandgewirke kann eine Materialdichte von 5 bis 400 kg/m³, bevorzugt von 10 bis 200 kg/m³, besonders bevorzugt von 15 bis 150 kg/m³, ganz besonders bevorzugt von 25 bis 100 kg/m³ aufweisen.

Die geeignete Ausführung des porösen Substrats soll optimaler Weise auf die Elemente des Gesamtsystems: Dämmdicke, Zusammensetzung der Formulierung, Einsatzbereich und so weiter abgestimmt sein. Hierbei kann durch die Wahl des porösen Substrats eine optimale Konfiguration aus der Anzahl, Form und Größe der poröses Substrat bildenden Elementen, sowie der Größe und Form und Ausführung der Deckflächenöffnungen gewählt werden, um die wärmedämmende Formulierung einzubringen und deren Fixierung in dem porösen Substrat zu gewährleisten. Bevorzugt werden Öffnungen in der Deckfläche eingesetzt, die maximal um Faktor 10 größer sind, als die größten Partikel der Füllstoffe und andere Feststoffadditive der Formulierung. Besonders vorteilhaft ist es, wenn diese Öffnungen eine Art automatischen Verschluss aufweisen, zum Beispiel Fäden, die durch Eigenspannung in eine mittlere, engere Position zurückdrücken (Diodenwirkung). Hierdurch kann eine effektive Befüllung der tragenden Struktur erfolgen.

Wenn die zu isolierende Oberfläche gut zugänglich, flach, eben, horizontal positioniert ist und sich auf der oberen Seite des zu isolierenden Gegenstandes befindet, kann das poröse Substrat einfach darauf gelegt werden direkt gefolgt durch Schritte b) und c) des erfindungsgemäßen Verfahren. In vielen anderen Fällen kann es aber sinnvoll sein, das poröse Substrat vorm Durchführen der Schritte b) und c) an die zu isolierende Oberfläche zu befestigen. Das im erfindungsgemäßen Verfahren eingesetzte poröse Substrat kann mechanisch und/oder mittels eines Hilfsmittels an die zu isolierende Oberfläche befestigt werden. Eine mechanische Befestigung kann zum Beispiel durch Biegen oder Einwickeln des porösen Substrats um den zu isolierenden Gegenstand erfolgen. Eine mechanische Befestigung des porösen Substrats an die zu isolierende Oberfläche kann auch mittels Hilfsmittel, beispielsweise Nägel, Klammern und dergleichen gewährleistet werden. Das poröse Substrat kann außerdem mittels der dazu geeigneten Klebstoffe an die zu isolierende Oberfläche geklebt sein.

Nach dem Aufbringen und der optionalen Befestigung des porösen Substrats an die zu isolierende Oberfläche im Schritt a) des erfindungsgemäßen Verfahrens, erfolgt im Schritt b) die Befüllung des porösen Substrats mit einer wärmedämmenden Formulierung. Das poröse Substrat kann dadurch teilweise oder vollständig mit einer wärmedämmenden Formulierung befüllt werden. Die Befüllung des porösen Substrats kann auf jede dazu geeignete Weise erfolgen, beispielsweise durch Anstreichen, Auftragen, Schmieren, Auspressen der wärmedämmenden Formulierung aus einer Tube und so weiter.

Eine für die Ausführung des erfindungsgemäßen Verfahrens geeignete wärmedämmende Formulierung kann mindestens ein Lösungsmittel und/oder Bindemittel und/oder ein Füllstoff enthalten.

Das Lösungsmittel kann dabei aus der Gruppe bestehend aus Wasser, Alkohole, aliphatische und aromatische Kohlenwasserstoffe, Äther, Ester, Aldehyde, Ketone und deren Gemische ausgewählt sein. Beispielsweise können als Lösungsmittel Wasser, Methanol, Ethanol, Propanol, Butanol, Pentan, Hexan, Benzol, Toluol, Xylol, Diethyläther, Methyl-tert-Butyläther, Ethylacetat, Aceton verwendet werden. Besonders bevorzugt weisen die in der wärmedämmenden Formulierung eingesetzten Lösungsmittel einen Siedepunkt von weniger als 300 °C, besonders bevorzugt weniger als 200 °C auf. Solche relativ flüchtigen Lösungsmittel können bei der Härtung der wärmedämmenden Formulierung im Schritt c) des erfindungsgemäßen Verfahrens leicht verdünstet oder verdampft werden.

Die im erfindungsgemäßen Verfahren eingesetzte wärmedämmende Formulierung kann mindestens ein Bindemittel enthalten, das die einzelnen Teile der gehärteten Formulierung untereinander und gegebenenfalls mit einem oder mehreren Füllstoffen und/oder anderen Additiven verbindet und somit die mechanischen Eigenschaften der gehärteten Formulierung verbessern kann. Ein solches Bindemittel kann organische oder anorganische Substanzen enthalten. Das Bindemittel enthält bevorzugt reaktive organische Substanzen. Organische Bindemittel können beispielsweise aus der Gruppe bestehend aus (Meth)acrylate, Alkydharze, Epoxidharze, Gummi arabicum, Kasein, Pflanzenöle, Polyurethane, Silikonharze, Wachs, Zelluloseleim, ausgewählt werden. Solche reaktiven organischen Substanzen können im Schritt c) des erfindungsgemäßen Verfahrens durch beispielsweise Polymerisation, Vernetzungsreaktion oder ein anderes chemisches Reaktionstyp zum Härten der eingesetzten wärmedämmenden Formulierung führen. Die Härtung im Schritt c) des erfindungsgemäßen Verfahrens kann beispielsweise thermisch oder unter Einwirkung der UV- oder anderer Strahlung stattfinden.

Zusätzlich zum organischen Bindemittel oder alternativ dazu, kann die im erfindungsgemäßen Verfahren eingesetzte wärmedämmende Formulierung anorganische härtbare Substanzen enthalten. Anorganische, auch als mineralisch bezeichnete Bindemittel haben im Wesentlichen die gleiche wie die organischen Bindemittel Aufgabe, Zuschlagsstoffe miteinander zu verbinden. Des Weiteren werden anorganische Bindemittel in nichthydraulische Bindemittel und hydraulische Bindemittel unterteilt. Nichthydraulische Bindemittel sind in Wasser lösliche Bindemittel wie Weißkalk, Dolomitkalk, Gips und Anhydrit, die nur an der Luft erhärten. Hydraulische Bindemittel sind Bindemittel, die an der Luft und unter Wasser erhärten und nach der Härtung in Wasser unlöslich sind. Zu ihnen gehören hydraulische Kalke, Zemente, Putz- und Mauerbinder.

Die im Schritt c) des erfindungsgemäßen Verfahrens stattfindende Härtung erfolgt durch mindestens teilweise Polymerisation und/oder Verdampfung des Lösungsmittels. Je nach verwendetem System, kann dieser Schritt bevorzugt bei Temperatur von 0 bis 500 °C, besonders bevorzugt von 5 bis 400°C, ganz besonders bevorzugt von 10 bis 300 °C erfolgen. Die Härtung im Schritt c) kann an der Luft oder unter Sauerstoffausschluss, beispielsweise unter Schutzgasatmosphäre von Stickstoff oder Kohlendioxid erfolgen. Dieser Schritt kann unter Normaldruck oder unter einem reduzierten Druck, zum Beispiel im Vakuum erfolgen.

Neben der Lösungsmittel und/oder Bindemittel, kann die im erfindungsgemäßen Verfahren eingesetzte wärmedämmende Formulierung ein oder mehrere poröse wärmedämmende Füllstoffe enthalten. Die wärmedämmende Formulierung kann bevorzugt Siliziumdioxid enthalten. Diese wärmedämmende Formulierung enthält besonders bevorzugt mindestens eine Substanz ausgewählt aus der Gruppe bestehend aus gefällten Kieselsäuren, pyrogen hergestellten Kieselsäuren, Aerogele, Xerogele und Perlite. Ganz besonders bevorzugt enthält die wärmedämmende Formulierung pyrogene Kieselsäuren. Pyrogene Kieselsäuren werden mittels Flammenhydrolyse oder Flammenoxidation hergestellt. Dabei werden hydrolysierbare oder oxidierbare Ausgangstoffe in der Regel in einer Wasserstoff-Sauerstoffflamme oxidiert, beziehungsweise hydrolysiert. Als Ausgangsstoffe für pyrogene Verfahren können organische und anorganische Stoffe eingesetzt werden. Besonders geeignet ist Siliciumtetrachlorid. Die so erhaltene hydrophile Kieselsäure ist amorph. Pyrogene Kieselsäuren liegen in der Regel in aggregierter Form vor. Unter "aggregiert" ist zu verstehen, dass sogenannte Primärpartikel, die bei der Genese zunächst entstehen, sich im weiteren Reaktionsverlauf fest miteinander unter Bildung eines dreidimensionalen Netzwerkes verbinden. Die Primärpartikel sind weitestgehend porenfrei und weisen auf ihrer Oberfläche freie Hydroxylgruppen auf. Solche hydrophilen Kieselsäuren können nach Bedarf beispielsweise durch Behandlung mit reaktiven Silanen hydrophobiert werden. Sowohl hydrophilen als auch hydrophoben Kieselsäuren können als Füllstoffe im erfindungsgemäßen Verfahren eingesetzt werden.

Die im erfindungsgemäßen Verfahren eingesetzte wärmedämmende Formulierung kann mindestens ein IR-Trübungsmittel enthalten. Ein solches IR-Trübungsmittel verringert die Infrarot-Durchlässigkeit eines Wärmedämmungsmaterials und minimiert somit den Wärmeübergang durch Strahlung. Bevorzugt wird das IR-Trübungsmittel aus der Gruppe bestehend aus Siliziumkarbid, Titandioxid, Zirkoniumdioxid, Ilmenite, Eisentitanate, Eisenoxide, Zirkoniumsilikate, Manganoxide, Graphite, Ruße und Gemischen davon ausgewählt. Die Partikelgröße der Trübungsmittel liegt in der Regel zwischen 0,1 bis 25 µm.

Die im erfindungsgemäßen Verfahren eingesetzte wärmedämmende Formulierung kann von 5 bis 90 Gew.-%, bevorzugt von 7 bis 70 Gew.-%, besonders bevorzugt von 10 bis 60 Gew.-% eines Bindemittels, von 20 bis 95 Gew.-%, bevorzugt von 25 bis 80 Gew.-%, besonders bevorzugt von 30 bis 70 Gew.-% einer Kieselsäure und von 5 bis 50 Gew.-%, bevorzugt von 10 bis 40 Gew.-%, besonders bevorzugt von 15 bis 30 Gew.-%, eines IR-Trübungsmittels enthalten.

Die wärmedämmende Schicht nach Härtung im Schritt c) des erfindungsgemäßen Verfahrens weißt vorzugsweise eine Dicke von mehr als 1 mm auf, bevorzugt beträgt diese 1 bis 200 mm, besonders bevorzugt von 2 bis 150 mm, ganz besonders bevorzugt von 3 bis 100 mm.

Die durch erfindungsgemäßes Verfahren herstellbare gehärtete wärmedämmende Schicht ist bevorzugt nicht offenporös und ist bündig mit dem zu isolierenden Gegenstand. Eine solche geschlossene Beschaffung des Wärmedämmungsmaterials hindert die Flüssigkeiten, vor allem Wasser, vorm Eindringen in die innere Struktur der Isolierungsschicht und bring technische Vorteile bei Verwendung solcher Isolierungsmaterialien.

Bei Bedarf kann vor Schritt a) des erfindungsgemäßen Verfahrens ein Primer zum Beispiel als zusätzlicher Korrosionsschutz auf die zu isolierende Oberfläche aufgebracht werden. Ebenfalls kann nach dem Härten im Schritt c) des erfindungsgemäßen Verfahrens eine abschließende Oberschicht, Top Coating, aufgebracht werden um das Aussehen oder andere Eigenschaften der isolierten Oberfläche zu verbessern.

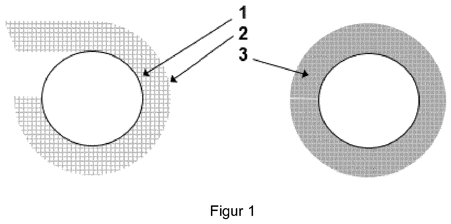

Im Folgenden wird die Erfindung anhand von Fig. 1, die eine spezielle Ausführungsform der vorliegenden Erfindung darstellt, die besonders zur Wärmedämmung eines Rohres geeignet ist, näher erläutert. Diese stark vereinfachte Zeichnung soll einen Gesamtüberblick der erfindungsgemäßen Verfahrensschritte geben:
a) Ein geeignetes poröses Substrat (2) wird auf die Oberfläche des zu isolierenden Rohres (1) aufgelegt und dort zum Beispiel durch Kleben befestigt;
b) Das poröse Substrat wird mit einer wärmedämmenden Formulierung (3) befüllt;
c) Abschließend erfolgt die Härtung der wärmedämmenden Formulierung in dem porösen Substrat direkt an der Oberfläche des zu isolierenden Rohres.

### Beispiel 1

### Herstellung der wärmedämmenden Formulierung 1:

Acronal® Eco 6716 (500 g, Hersteller: BASF) und deionisiertes Wasser (50 g) wurden in einem Becherglas für 5 Minuten mit einem 50 mm Propellerrührer bei Rührgeschwindigkeit von 750 Umdrehungen/Minute vermischt. Enova® Aerogel IC 3110 (100 g, Hersteller: Cabot) wurde zum Wasser/Acronal® Gemisch mit Zugaberate von 10 g Aerogel /Minute zugegeben. Das resultierende Gemisch wurde für weitere 10 Minuten bei Rührgeschwindigkeit von 750 Umdrehungen/Minute gerührt. Die so erhaltene wärmedämmende Formulierung hatte eine Dichte von 464 g/L, Feststoffanteil von 54%.

### Gewebebefülllung:

In diesem Beispiel wurde das Abstandsgewirke der Firma Müller Textiles, mit dem Namen T5993-1000-1450-0001 aus 100% Polyester verwendet. Diese Struktur weist eine Lage, eine Dicke von 10 mm, ein Flächengewicht von ca. 520 g/m² auf und hat eine Maschenweite von ca. 10 mm. Die Oberflächen werden durch Polfäden auf Abstand gehalten, die dem Gewirke hierdurch eine gewisse Druckfestigkeit geben, bei gleichzeitiger hoher Flexibilität und Rückstellvermögen. Das Gewebestück mit 200 mm x 200 mm Große wurde ausgeschnitten und in eine Form mit Abmessungen 200 mm x 200 mm x 10 mm, die mit einer Lage transparenter PE-Folie ausgelegt wurde, für die optische Bewertung und einfache Entformung platziert. Die vorher vorbereitete wärmedämmende Formulierung 1 wurde ins Gewebe mittels eines zur Gewebeoberfläche um 45° geneigten Brettes eingerieben. Dieses Brett wurde in jede Richtung 2 mal über das Gewebe gestriffen (links-rechts und oben-unten) mit einer Geschwindigkeit von 200 mm pro 10 Sekunden. Dabei wurde stets darauf geachtet, dass es für die Befüllung des Gewebes ausreichend wärmedämmende Formulierung zur Verfügung stand, die bei Bedarf sofort nachgefüllt wurde. Nachdem die Befüllung beendet war, wurde die überschüssige Formulierung durch deren leichtes Abtragen mittels eines Spachtels vom Gewebe entfernt. Das Abstandsgewebe konnte während des Befüllprozesses problemlos und vollständig mit der Formulierung befüllt werden (Befüllungsgrad nahezu 100%), ohne sich zu verformen. Die so erhaltene Probe wurde mit PE-Folie entfernt und anschließend für 7 Tage bei 25 °C und 50% Luftfeuchte getrocknet / gehärtet. Das ausgehärtete Produkt wies keine Hohlräume oder Risse auf, die ursprüngliche Geometrie und Volumen des Gewebes wurden erhalten. Die Wärmeleitfähigkeit des ausgehärteten Produkts gemessen mittels eines Plattengeräts (EP500, Hersteller lambda Messtechnik Dresden) bei 10°C Mitteltemperatur und 15K Temperaturdifferenz und einem Anpressdruck von 2500 Pa, war 41,4 mW/(m^{∗}K). Die wichtigsten Parameter bei der Durchführung des Beispiels 1 sind in der nachstehenden Tabelle 1 zusammengefasst.

### Vergleichsbeispiel 1

In diesem Beispiel wurde Thinsulate® G80 (Hersteller: 3M) mit geschätzten Maschenweite von 0,1 mm als poröses Substrat verwendet. Die Befüllung dieses Substrats (200 mm x 200 mm x 11 mm Ausschnitt) mit der wärmedämmenden Formulierung 1 wurde identisch dem in Beispiel 1 beschriebenen Vorgang durchgeführt. Dabei konnte das Gewebe bei weitem nicht vollständig befüllt werden (Füllgrad 15,6% bezogen auf die ursprüngliche Dicke) und verformte und komprimierte sich bei Befüllung stark. Nach dem Aushärten des teilweise befüllten Materials für 7 Tage bei 25 °C und 50% Luftfeuchte, wurde es optisch beurteilt. Dabei wurde es festgestellt, dass die Eindringtiefe der wärmedämmenden Formulierung ins Gewebe maximal 2 mm betrug, während die Unterseite des Gewebes nicht befüllt blieb. Dieses Material ist für eine effiziente Wärmedämmung nicht einsetzbar. Die wichtigsten Parameter bei der Durchführung des Vergleichsbeispiels 1 sind in der nachstehenden Tabelle 1 zusammengefasst.

### Vergleichsbeispiel 2

In diesem Beispiel wurde BawiTec-Badewien Fiberglasgewebe (Fliegengitter, schwarz, PVCummantelt, Rollenware, Breite: 120 cm, Länge: 30m) mit Maschenweite 1,4mm x 1,4mm, als poröses Substrat verwendet. Mehrere Gewebestücke mit 200 mm x 200 mm Große wurden ausgeschnitten und zusammengelegt, so dass man eine Gesamtdicke des Stapels von ca. 10 mm erreicht hat. Dieser Stapel aus mehreren Gewebeschichten wurde in eine Form mit Abmessungen 200 mm x 200 mm x 10 mm gelegt. Die Befüllung dieses Substrats mit der wärmedämmenden Formulierung 1 wurde identisch dem in Beispiel 1 beschriebenen Vorgang durchgeführt. Dabei konnte das Gewebe bei weitem nicht vollständig befüllt werden (Füllgrad 22 %) aber verformte oder komprimierte sich bei Befüllung nicht. Nach dem Aushärten des teilweise befüllten Materials für 7 Tage bei 25 °C und 50% Luftfeuchte, wurde es optisch beurteilt. Dabei wurde es festgestellt, dass die Eindringtiefe der wärmedämmenden Formulierung ins Gewebe maximal 8 von insgesamt 38 eingesetzten Lagen betrug, während die übrigen, zur Unterseite (Richtung PE-Folie) des Stapels befindende Lagen, nicht befüllt blieben. Dieses Material ist für eine effiziente Wärmedämmung nicht einsetzbar. Die wichtigsten Parameter bei der Durchführung des Vergleichsbeispiels 2 sind in der nachstehenden Tabelle 1 zusammengefasst.

**Tabelle 1**

| | **Beispiel 1** | **Vergleichsbeispiel 1** | **Vergleichsbeispiel 2** |
|---|---|---|---|
| Poröses Substrat | Abstandsgwirke, Müller textiles T5993-1000 | Thinsulate, 3M G80 | Fiberglasgewebe, BawiTec |
| Maschenweite, mm | 10 | 0,1 | 1,4 |
| Anzahl Lagen | 1 | 1 | 38 |
| Flächenmasse, g/m² | 520 | 80 | 109 |
| Dicke der Einzellage, mm | 10 | 11 | 0,263 |
| Dicke des Stapels, mm | 10 | 11 | 10 |
| Dichte, kg/m³ | 52 | 7,3 | 415 |
| Druckspannung (DIN EN ISO 3386-1), kPa | 8,5 | <0,1 | > 100 |
| Porosität, % | 96,2 | 99,5 | 79,3 |
| Leeres Volumen bei Form 20 cm x 20 cm x 1 cm, cm³ | 385 | 398 | 317 |
| Gewicht Gewebe leer, g | 21 | 3,2 | 156 |
| Volumen des befüllten Gewebes, cm³ | 388 | 62 | 71 |
| Gewicht Gewebe maximal befüllt, g | 202 | 33 | 190 |
| Füllgrad bezüglich der ursprünglichen Porosität, % | 100 | 15,6 | 22 |
| Wärmeleitfähig keit, mW/(m*K) | 41,4 | Nicht gemessen (keine vollständige Befüllung) | Nicht gemessen (keine vollständige Befüllung) |

Verwendung des Abstandgewirkes als ein poröses Substrat (Beispiel 1) zeigte gegenüber den anderen Gewebetypen (Vergleichsbeispiele 1 und 2) große Vorteile, da das Abstandgewirke auf eine sehr einfache Weise vollständig befüllbar ist. Eine solche vollständige Befüllung sorgt für eine niedrige Wärmeleitfähigkeit, die für die Anwendung in Wärmedämmungen benötigt wird. Außerdem entstehen bei der Anwendung des Abstandgewirkes keine Hohlräume oder Risse, die das Korrosionsrisiko an den isolierenden Materialien erhöhen würden. Sowohl die relativ breite Maschenweite des eingesetzten Abstandgewirkes (10 mm) als auch die große mechanische Festigkeit dieses Materials zeigen im Vergleich zu den anderen getesteten Gewebetypen zusätzliche vorteilhafte Wirkung.

### Beispiel 2

In diesem Beispiel wurde das Abstandsgewirke der Firma Müller Textiles, 51674 Wiehl, Deutschland, mit dem Namen T5960-2000-2000-0001 aus 100% Polyester verwendet. Diese Struktur weist eine Dicke von 20 mm auf, ein Flächengewicht von ca. 1080 g/m² und hat Deckschichten mit Öffnungen (Maschenweite) im Bereich 5 mm Durchmesser. Die Oberflächen werden durch Polfäden auf Abstand gehalten, die dem Gewirke hierdurch eine gewisse Druckfestigkeit geben, bei gleichzeitiger hoher Flexibilität und Rückstellvermögen. Dieses Abstandsgewirke wurde in der richtigen Abmessung einlagig um ein Blechrohr mit einem Innendurchmesser von 120 mm, einer Wandstärke von 1 mm und einer Länge von 250 mm gelegt und an der Stoßnaht/-kante mit einem Nähfaden fixiert, so dass das Abstandsgewirke eng um das Rohr anliegt.

Als nächstes wurde wärmedämmende Formulierung 2 manuell mit einem Spachtel angemischt, bis eine gleichmäßige Mischung vorlag, bestehend aus:
1 Teil Blähglasgranulat als Schüttung mit einer Partikeldichte von 350 g/l und einer Wärmeleitfähigkeit von 70-80 mW/(m^{∗}K) vom Hersteller Liaver, für Details siehe: R. Schreiner, E.-G. Hencke, "Characterization Work and Comparative Testing of Expanded Glass Granulate as a Round Robin Material for Thermal Conductivity at Higher Temperatures, International Journal of Thermal Sciences", DOI 10.5703/1288284315540. 5 Teile RTV Silikon (Marke b1 - besser sparen, transparentes Silikon, enthält Biozide/fungizide Beschichtungsschutzmittel (2 octyl-2H-isothiazol-3-one)).

Diese wärmedämmende Formulierung 2 wurde anschließend in das Abstandsgewirke mittels eines Spatels eingestrichen und eingepresst. Am besten haben sich oszillierende Bewegungen hervorgetan. Anschließend wurde dieses Rohrmuster für 5 Tage bei Raumtemperatur gehärtet. Dann wurde das Rohr an einer Öffnung mit einer Blende wasserdicht verschlossen und senkrecht stehend mit Wasser befüllt. Wassertemperatur im Rohr wurde auf 80°C eingestellt. Im stationären Zustand, das heißt nach dem Aufwärmen und Einregeln der Sollwassertemperatur, wurde die Temperatur der isolierten Außenoberfläche des Rohrs mit einem Pyrometer auf der Mitte der Rohrlänge zu 40°C bestimmt. Dieser Versuch fand in einem Laborraum statt ohne erzwungene Konvektion und bei Lufttemperaturen von 22°C.

Beispiel 2 zeigt, dass mit dem erfindungsgemäßen Verfahren auf eine sehr einfache und praktische Weise eine wärmedämmende Schicht von 20 mm Dicke auf ein Rohr aufgetragen werden kann.

## Patentansprüche

1. Verfahren zur Aufbringung einer wärmedämmenden Schicht auf eine zu isolierende Oberfläche eines Gegenstandes umfassend die folgenden Schritte:
a) Aufbringung eines aus einem Abstandgewirke bestehenden porösen Substrats auf die zu isolierende Oberfläche;
b) Befüllung der im Schritt a) aufgebrachten porösen Substrats mit einer wärmedämmenden Formulierung;
c) Härtung der im Schritt b) befüllten Formulierung.

2. Verfahren nach Anspruch 1,
**dadurch gekennzeichnet, dass**
der die zu isolierende Oberfläche aufweisende Gegenstand ausgewählt aus der Gruppe bestehend aus Wand, Decke, Flur, Platte, Rohrleitung und Rohr, ist.

3. Verfahren nach Anspruch 1 oder 2,
**dadurch gekennzeichnet, dass**
das poröse Substrat flexibel ist.

4. Verfahren nach Anspruch 3,
**dadurch gekennzeichnet, dass**
das poröse Substrat aus der Gruppe bestehen aus synthetischen Polymeren, Zellulose-basierten Faser, Baumwolle, Wolle, Seide, Mineralwolle, Glaswolle, Metallen, Kohlefaser und deren Kombinationen ausgewählt ist.

5. Verfahren nach einem der Ansprüche 1 bis 4,
**dadurch gekennzeichnet, dass**
das Abstandgewirke eine Maschenweite von 2 bis 100 mm hat.

6. Verfahren nach einem der Ansprüche 1 bis 5,
**dadurch gekennzeichnet, dass**
das poröse Substrat im Schritt a) mechanisch und/oder mittels eines Hilfsmittels an die zu isolierende Oberfläche befestigt wird.

7. Verfahren nach einem der Ansprüche 1 bis 6,
**dadurch gekennzeichnet, dass**
die wärmedämmende Formulierung ein Bindemittel enthaltend polymerisierbare Substanzen und/oder Wasser umfasst.

8. Verfahren nach einem der Ansprüche 1 bis 7,
**dadurch gekennzeichnet, dass**
die wärmedämmende Formulierung Kieselsäure enthält.

9. Verfahren nach einem der Ansprüche 1 bis 8,
**dadurch gekennzeichnet, dass**
die wärmedämmende Formulierung mindestens ein IR-Trübungsmittel enthält.

10. Verfahren nach einem der Ansprüche 1 bis 9,
**dadurch gekennzeichnet, dass**
die wärmedämmende Formulierung von 5 bis 90 Gew.-% eines Bindemittels, von 20 bis 95 Gew.-% einer Kieselsäure und von 5 bis 50 Gew.-% eines IR-Trübungsmittels enthält.

11. Verfahren nach einem der Ansprüche 1 bis 10,
**dadurch gekennzeichnet, dass**
die im Schritt c) stattfindende Härtung durch mindestens teilweise Polymerisation und/oder Verdampfung des Wassers erfolgt.

12. Verfahren nach einem der Ansprüche 1 bis 11,
**dadurch gekennzeichnet, dass**
die wärmedämmende Schicht nach Härtung eine Dicke von mehr als 1 mm aufweist.

## Claims

1. Process for applying a heat-insulating layer to a surface of an article, which surface is to be insulated, comprising the following steps:
a) applying a porous substrate consisting of a spacer fabric to the surface to be insulated;
b) filling the porous substrate applied in step a) with a heat-insulating formulation;
c) curing the formulation filled in step b).

2. Process according to Claim 1,
**characterized in that**
the article having the surface to be insulated is selected from the group consisting of wall, ceiling, floor, plate, pipeline and pipe.

3. Process according to Claim 1 or 2,
**characterized in that**
the porous substrate is flexible.

4. Process according to Claim 3,
**characterized in that**
the porous substrate is selected from the group consisting of synthetic polymers, cellulose-based fibres, cotton, wool, silk, mineral wool, glass wool, metals, carbon fibres and the combinations thereof.

5. Process according to any of Claims 1 to 4,
**characterized in that**
the spacer fabric has a mesh size of from 2 to 100 mm.

6. Process according to any of Claims 1 to 5, **characterized in that**
the porous substrate in step a) is attached mechanically and/or by means of an aid to the surface to be insulated.

7. Process according to any of Claims 1 to 6,
**characterized in that**
the heat-insulating formulation comprises a binder containing polymerizable substances and/or water.

8. Process according to any of Claims 1 to 7,
**characterized in that**
the heat-insulating formulation contains silica.

9. Process according to any of Claims 1 to 8,
**characterized in that**
the heat-insulating formulation contains at least one IR opacifier.

10. Process according to any of Claims 1 to 9,
**characterized in that**
the heat-insulating formulation contains from 5 to 90% by weight of a binder, from 20 to 95% by weight of a silica, and from 5 to 50% by weight of an IR opacifier.

11. Process according to any of Claims 1 to 10,
**characterized in that**
the curing taking place in step c) is achieved by at least partial polymerization and/or vaporization of the water.

12. Process according to any of Claims 1 to 11,
**characterized in that**
the heat-insulating layer after curing has a thickness of more than 1 mm.

## Revendications

1. Procédé d'application d'une couche d'isolation thermique sur une surface à isoler d'un objet, comprenant les étapes suivantes :
a) l'application d'un substrat poreux constitué par un tricot espaceur sur la surface à isoler ;
b) le remplissage du substrat poreux appliqué dans l'étape a) avec une formulation d'isolation thermique ;
c) le durcissement de la formulation remplie dans l'étape b).

2. Procédé selon la revendication 1, **caractérisé en ce que** l'objet comprenant la surface à isoler est choisi dans le groupe constitué par un mur, un plafond, un couloir, une plaque, une canalisation et un tube.

3. Procédé selon la revendication 1 ou 2, **caractérisé en ce que** le substrat poreux est flexible.

4. Procédé selon la revendication 3, **caractérisé en ce que** le substrat poreux est choisi dans le groupe constitué par les polymères synthétiques, les fibres à base de cellulose, le coton, la laine, la soie, la laine minérale, la laine de verre, les métaux, les fibres de carbone et leurs combinaisons.

5. Procédé selon l'une quelconque des revendications 1 à 4, **caractérisé en ce que** le tricot espaceur a une largeur de maille de 2 à 100 mm.

6. Procédé selon l'une quelconque des revendications 1 à 5, **caractérisé en ce que** le substrat poreux est fixé mécaniquement et/ou au moyen d'un auxiliaire à la surface à isoler dans l'étape a).

7. Procédé selon l'une quelconque des revendications 1 à 6, **caractérisé en ce que** la formulation d'isolation thermique comprend un liant contenant des substances polymérisables et/ou de l'eau.

8. Procédé selon l'une quelconque des revendications 1 à 7, **caractérisé en ce que** la formulation d'isolation thermique contient de la silice.

9. Procédé selon l'une quelconque des revendications 1 à 8, **caractérisé en ce que** la formulation d'isolation thermique contient au moins un agent opacifiant IR.

10. Procédé selon l'une quelconque des revendications 1 à 9, **caractérisé en ce que** la formulation d'isolation thermique contient de 5 à 90 % en poids d'un liant, de 20 à 95 % en poids d'une silice et de 5 à 50 % en poids d'un agent opacifiant IR.

11. Procédé selon l'une quelconque des revendications 1 à 10, **caractérisé en ce que** le durcissement ayant lieu dans l'étape c) est effectué par évaporation de l'eau et/ou polymérisation au moins partielle.

12. Procédé selon l'une quelconque des revendications 1 à 11, **caractérisé en ce que** la couche d'isolation thermique présente après le durcissement une épaisseur de plus de 1 mm.
